# EUROPÄISCHE PATENTANMELDUNG

(11) **EP 1 826 243 A2**
(43) Veröffentlichungstag der Anmeldung: **29.08.2007**
(21) Anmeldenummer: 07002868.3
(22) Anmeldetag: 10.02.2007
(51) Int. Cl.: C08L 83/00

(54) **Polymere aus organisch modifizierten Siloxanharzen mit Trenneffekt**

(30) Priorität: 24.02.2006 DE 102006008590
(71) Anmelder: Goldschmidt GmbH, 45127 Essen (DE)
(72) Erfinder: Cavaleiro, Pedro, Dr., 41749 Viersen (DE); Hallack, Markus, 46514 Schermbeck (DE); Karminski, Hans-Leo, 45134 Essen (DE); Schiemann, Udo, Dr., 45357 Essen (DE); Volmer-Sawitowski, Christiane, 45133 Essen (DE)

(57) **Zusammenfassung**

Die vorliegende Erfindung betrifft Zusammensetzungen zur Herstellung von Beschichtungen mit Trenneffekt, ein Verfahren zur Herstellung der Zusammensetzungen sowie damit beschichtete Substrate.

## Beschreibung

Die vorliegende Erfindung betrifft lagerstabile Zusammensetzungen zur Herstellung von Beschichtungen mit Trenneffekt, damit beschichtete Substrate, sowie ein Verfahren zur Herstellung der Zusammensetzungen, sowie ihre Verwendung.

Siliconharz- und Siliconöl-basierende Beschichtungen und deren Benutzung als Trennbeschichtung sind seit langer Zeit bekannt. So beschreibt das US-Patent 2 606 510 die Verwendung von Siliconharzen, das US-Patent 2 462 242 die Benutzung von Siliconölen.

Die Verwendung von hydroxyfunktionellen Polymethylphenylsiliconharzen für Trennbeschichtungen bei Backformen wird in US-Patent 2 672 104 beschrieben.

Die Kombination von Siliconharzen und Siliconölen für Trennbeschichtungen wird seit mehreren Jahren in der Praxis verwendet. Derartige Kombinationen sind besonders wegen der Trennwirkung bei einem weiten Bereich an Nahrungsmitteln und wegen der guten Beständigkeit geeignet. Ein Beispiel ist die in US-Patent 3 002 946 beschriebene Kombination aus 80-98 Gew.-% Bindemittel, 1-10 Gew.-% hydroxyendfunktionellem Polymethylphenylsiloxan-Öl und 1-19 Gew.-% Methylgruppen endverschlossenen Polydiorganosiloxan-Öl.

Weitere Patente befassen sich mit der Verbesserung der Formulierung, wie in US-Patent 3 002 946 beschrieben. Diese Verbesserungen sind teils, wie in US-Patent 3 925 276 beschrieben, Verbesserungen des Siliconharzes, oder, wie in US-Patent 4 302 512, die Verbesserung des Siliconöles. Das europäische Patent EP 0 239 049 beschreibt die Optimierung der Katalysatoren bei der Herstellung der Trennbeschichtung.

Die Verwendung von Siliconpolyester wird in Kombination mit laminaren Festkörpern im UK-Patent GB 2 152 946 A und in Kombination mit linearen Siloxanen im deutschen Patent DE 37 284 14 A beschrieben.

Ein weiteres Patent befasst sich mit der Verbesserung der Formulierung, wie in EP 1 072 660 beschrieben. Diese Verbesserungen optimieren die Verträglichkeit des Siliconharzes mit dem Siliconöl, indem Hydroxygruppen enthaltende Polyester der Formulierung zugesetzt werden.

Die Vermischung der Polysiloxanharze mit Trenneffekt wird üblicherweise mit Dispergier- und/oder Mahlvorrichtungen vorgenommen, die einen Energieeintrag von weniger als 20 kJ/m³ bewirken.

In der Praxis weisen die oben genannten Beschichtungen eine ungenügende Phasenstabilität aus. Weiterhin werden in der Praxis verbesserte Trenneffekte erwünscht.

Eine Aufgabe der vorliegenden Erfindung besteht in der Bereitstellung eines phasenstabilen, d.h. lagerstabilen, Polysiloxanharzes mit Trenneffekt und der daraus hergestellten Trennbeschichtung mit verbesserten Eigenschaften bezüglich des Trenneffektes, sowie ein Verfahren zur Herstellung dieser Trennbeschichtungen. Die Trennbeschichtung muß ungiftig und einfach auf beschichtete oder unbeschichtete Substrate zu applizieren sein.

Die vorgenannte Aufgabe wird gelöst durch eine Zusammensetzung zur Herstellung von Beschichtungen mit Trenneffekt enthaltend Polysiloxanharze, organomodifizierte Polysiloxane und nanoskalige Feststoffe.

Ein Gegenstand der Erfindung sind daher Zusammensetzungen zur Herstellung von Trennbeschichtungen, enthaltend
(A) 100 Gew.-Teile eines oder mehrerer Polysiloxanharze der allgemeinen Formel

   RₐSi(OR')_{b}O_{(4 - a - b)/2}

   mit 0<a<2, 0<b<2 und a+b<4,
(B) 0,05 bis 10 Gew.-Teile eines oder mehrerer linearer und/oder verzweigter Polysiloxane der Formel

   R''O-[R'''₂Si-O]ₙ-R''
C) 5 bis 80 Gew.-Teile eines Hydroxylgruppen enthaltenden Polyesters,
   wobei
   Rₐ, R', R'' und R''' jeweils unabhängig voneinander für einen Alkylrest mit 1 bis 8 C-Atomen oder einen aromatischen Rest mit 6 bis 20 C-Atomen steht und
   n für eine Zahl im Bereich von 4 bis 5000 steht, welches dadurch gekennzeichnet ist, dass
(D) 2 bis 80 Gew.-Teile, vorzugsweise 10 bis 50, insbesondere 20 bis 30 Gew.-Teile eines oder mehrerer nanoskaliger Feststoffe mitverwendet werden.

Komponente (A) (RₐSi(OR')_{b}O_{(4 - a - b)/2}) ist ein Polysiloxanharz mit 0<a<2, 0<b<2 und a+b<4, wobei R eine Alkylgruppe, bestehend aus 1 bis 8 Kohlenstoffatomen, oder eine aromatische Gruppierung mit 6 bis 20 Kohlenstoffatomen ist. Beispiele für Alkylgruppen sind Methyl, Ethyl, Isopropyl, n-Butyl und t-Butyl. Ein Beispiel für eine aromatische Gruppierung ist Phenyl. Bevorzugte Substituenten R sind Methyl oder Phenyl oder Mischungen aus Methyl und Phenyl. R' ist eine Alkylgrupppe bestehend aus 1 bis 8 Kohlenstoffatomen wie zum Beispiel Methyl oder Ethyl.

Die Herstellung von Siliconharzen der Komponente (A) ist seit langem in der Literatur bekannt (siehe W. Noll in "Chemie und Technologie der Silicone", Verlag Chemie, Weinheim (1968)) und wird beispielsweise im deutschen Patent DE 34 12 648 C, auf die voll umfänglich Bezug genommen wird, beschrieben.

Das Polysiloxan (Komponente (B)) der Formel R''O-[R'''₂Si-O]ₙ-R" wird üblicherweise auch als Trennöl bezeichnet. R" steht beispielsweise für einen Wasserstoffrest oder eine Alkylgruppe, mit 1 bis 8 Kohlenstoffatomen. R" kann auch für eine -Si(CH₃)₃-Gruppe stehen.

R''' kann innerhalb des Moleküls der Komponente (B) gleich oder verschieden sein und für eine Phenylgruppe oder eine Alkylgruppe, bestehend aus 1 bis 8 Kohlenstoffatomen, stehen. Bevorzugt steht R''' für Methyl oder Phenyl oder Mischungen aus Methyl und Phenyl. Ein geringer Anteil von R''' kann auch für eine Polysiloxanseitenkette -[R'''₂Si-O]ₙ-R'' stehen, so dass neben linearen Strukturen auch leicht verzweigte Strukturen des Trennöls möglich sind. n ist im Durchschnitt 4 bis 5000.

Ebenfalls geeignet als Komponente (B) sind reine Polydimethylsiloxane und Polydimethylsiloxane, bei denen bis zu 20 Mol-% der Methylreste durch Phenylreste ersetzt sind. Derartige Siloxane weisen keine reaktiven Gruppen auf (R'' = -Si(CH₃)₃).

Der hydroxygruppenhaltige Polyester (Komponente (C)), der beispielsweise in der DE 37 28 414 C1 beschrieben ist, auf die voll umfänglich Bezug genommen wird, wird zum Beispiel durch Veresterungsreaktion aus Polycarbonsäuren und Polyalkoholen oder durch Umesterungsreaktion von Polycarbonsäureestern mit Polyalkoholen mit einem Stoffmengenverhältnis COOR : C-OH, bzw. COOH zu C-OH > 1,0 hergestellt.

Ein Feststoff (Komponente (D)) im Sinne der vorliegenden Erfindung kann prinzipiell jedes feste organische oder anorganische nanoskalige Partikel sein.

Unter nanoskalig im Sinne der Erfindung sind Feststoffe mit einer mittleren Aggregat- oder Agglomeratgröße ≤ 800 nm, vorzugsweise ≤ 500 nm, insbesondere ≤ 150 nm, ganz besonders bevorzugt im Bereich um 60 nm und/oder einer Primärpartikelgröße ≤ 100 nm, vorzugsweise ≤ 50 nm, insbesondere ≤ 15 nm zu verstehen.

Beispiele solcher Feststoffe sind Pigmente, Füllstoffe, Farbstoffe, keramische Materialien, magnetische Materialien, Metalle, Biozide, Agrochemikalien und Pharmaka, die auf die entsprechende Korngrößenverteilung verkleinert bzw. gebracht werden können.

Bevorzugte Feststoffe sind Pigmente, wie sie zum Beispiel im "Colour Index, Third Edition, Volume 3; The Society of Dyers and Colorists (1982)" und den nachfolgenden, überarbeiteten Auflagen genannt werden.

Beispiele für Pigmente sind anorganische Pigmente, wie Ruße, Titandioxide, Zinkoxide, Preußischblau, Eisenoxide, Cadmiumsulfide, Chrompigmente, wie zum Beispiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt.

Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol und Phtalocyaninpigmente. Weitere Beispiele für organische Pigmente werden in dem Buch "W. Herbst, K.Hunger, Industrial Organic Pigments, VCH, Weinheim (1993)" genannt.

Weitere bevorzugte Feststoffe sind Füllstoffe, wie zum Beispiel Talk, Kaolin, Kieselsäuren, Baryte und Kalk; keramische Materialien, wie zum Beispiel Aluminiumoxide, Silikate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen; und Biozide, Agrochemikalien und Pharmaka, wie zum Beispiel Fungizide.

Weitere bevorzugte Feststoffe sind Pulver, die gegebenenfalls oberflächenmodifiziert sind.

Die Art und die Herkunft der in dieser erfindungsgemäß mitverwendbaren Pulver ist nicht limitiert. Bevorzugt können jedoch Pulver aus Feststoffen in Form eines Metalles, eines Metalloxid, eines Metallborides, eines Metallcarbides, eines Metallnitrides, eines Metallcarbonates, eines Metallphosphates, eines Metallchalkogenides, eines Metallsulfates und/oder eines Metallhalogenides hergestellt werden.

Das Metall kann bevorzugt Li, Na, K, Rb, Cs, Be, Mg, Ca, Sr, Ba, Sc, Y, La, Ce, Pr, Nd, Sm, Eu, Gd, Tb, Ti, Zr, Hf, V, Nb, Ta, Cr, Mo, W, Mn, Fe, Co, Ni, Cu, Zn, Ag, Cd, Hg, B, Al, Ga, In, Te, Se, Tl, Si, Ge, Sn, Pb, P, As, Sb und/oder Bi sein. Im Sinne der Erfindung sollen auch die Nichtmetalle B, Si, und P miterfasst sein.

Insbesondere kann der Feststoff aus einem Metalloxid, welches die Elemente Si, Al, Ti, Fe, Ce, In, Sb, Zn, Sn, Y und/oder Zr enthält, hergestellt sein. Besonders vorteilhaft kann es sein, wenn die aminofunktionellen Feststoffe aus Feststoffen wie den Metallmischoxiden Indiumzinnoxid, Antimonzinnoxid; Mischoxide mit Matrix-Domänenstruktur, wie beispielsweise die in EP-A-1284485 oder in EP-A-1468962 beschrieben, hergestellt werden.

Insbesondere kann der Feststoff auch ein durch Fällung, wie beispielsweise in WO 00/14017 beschrieben, hergestelltes Metalloxid enthalten.

Die Mengenanteile der Komponenten (A), (B), (C) und (D) können in breiten Bereichen variiert werden.

Die Komponente (B) kann in Mengen von ca. 0,05 bis 10 Gew.-Teilen, bevorzugt 0,5 bis 8 Gew.-Teile, vorliegen. Besonders bevorzugt im Sinne der vorliegenden Erfindung sind Zusammensetzungen, die 4 bis 6 Gew.-Teile Polysiloxan (B), bezogen auf 100 Gew.-Teile der Komponente (A), enthalten.

Die Komponente (C) kann in Mengen von ca. 5 bis 80 Gew.-Teilen, bevorzugt 10 bis 80 Gew.-Teile, vorliegen. Besonders bevorzugt im Sinne der vorliegenden Erfindung sind Zusammensetzungen, die 30 bis 70 Gew.-Teile Polysiloxan (C), bezogen auf 100 Gew.-Teile der Komponente (A), enthalten. Die Modifizierung des Siliconharzes mit einem Polyester durch Umesterungsreaktion erhöht die Kochwasserbeständigkeit und verringert die Thermoplastizität der gehärteten Beschichtung. Ebenfalls werden Pigmentierbarkeit und der Glanz der Beschichtung verbessert.

Die Komponente (D) kann in Mengen von ca. 2 bis 80 Gew.-Teilen, bevorzugt 5 bis 60 Gew.-Teile, vorliegen. Besonders bevorzugt im Sinne der vorliegenden Erfindung sind Zusammensetzungen, die 15 bis 40 Gew.-Teile Polysiloxan (D), bezogen auf 100 Gew.-Teile der Komponente (A) + (B) + (C), enthalten.

Ein Verfahren zur Homogenisierung der Komponenten (A) bis (D), zusammen oder in beliebiger Reihenfolge, beispielsweise erst die Komponenten (A) bis (C) und dann (D), kann mit den bekannten Dispergier- und/oder Mahlvorrichtungen des Standes der Technik erfolgen.

Die Beschichtungszusammensetzungen sind vorzugsweise dadurch erhältlich, dass man die Komponenten (A), (B), (C) und (D) gleichzeitig miteinander umsetzt. An dieser Umsetzung können auch die Feststoffe beteiligt sein, die an der Oberfläche reaktive Gruppen enthalten. Diese Komponenten werden vorzugsweise nur bis zu einem Umsetzungsgrad von 20 bis 80 %, insbesondere 25 bis 80 %, bezogen auf die Komponente (B), umgesetzt (Vorkondensat).

Überraschenderweise wurde gefunden, dass dadurch eine deutliche Verbesserung der Phasenstabilität der Beschichtung erreicht werden kann. Die Separationsneigung des Polysiloxans (B) wird dadurch deutlich erniedrigt.

Ein ausreichender Umsetzungsgrad läßt sich beispielsweise dadurch ermitteln, dass man aus der Reaktionsmischung einen Teil entnimmt, diesen auf einer Glasplatte, gegebenenfalls in der Wärme, trocknet und die Transparenz der Beschichtung der Glasplatte mit üblichen Methoden bestimmt. Ein klarer, transparenter Film zeigt in der Regel einen ausreichenden Umsatz an. Aus der abdestillierten Kondensatmenge kann man darüber hinaus den Reaktionsumsatz genau bestimmen.

Eine weitere Aufgabe der vorliegenden Erfindung besteht darin, die Beständigkeit der Trennbeschichtungen bei mechanischen Beanspruchungen, wie beispielsweise die Abrasions- und Kratzbeständigkeit, zu verbessern.

Überraschenderweise gelingt dies durch die Homogenisierung der Bestandteile mittels Hochdruckhomogenisatoren, wie die beispielsweise unter der Bezeichnung "Wet-Jet-Mill" bekannten Apparaturen.

Bei diesen Vorrichtungen werden zwei unter hohem Druck stehende vordispergierte Suspensionsströme über eine Düse entspannt. Die Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche. Die Operation kann beliebig oft wiederholt werden, um kleinere Teilchengrößen zu erhalten.

Diese Vorrichtungen wurden bislang nur zur Dispergierung von chemisch einheitlichen Oxiden, wie Zinkoxid, Siliziumdioxid, Aluminiumoxid (UK-A-2 063 695, EP-A-876 841, EP-A-773 270, WO 00/172 282 A1) in organischen oder wässrigen Lösemitteln verwendet. Die Vermahlung und Dispergierung von gefüllten Trennbeschichtungen, die dieser Erfindung zu Grunde liegen, ist mit diesen Vorrichtungen bislang nicht beschrieben.

Dies war um so überraschender, da übliche Hochenergiemischgeräte, wie zum Beispiel Systeme, Rotor-Stator- oder Ultra-Turrax-Maschinen oder Rührwerkskugelmühlen oder Planetenkneter/-mixer, nicht geeignet sind.

Ein weiterer Gegenstand der Erfindung ist daher ein Verfahren zur Herstellung einer Zusammensetzung für die Herstellung von Trennbeschichtungen mit verbesserter Abrasions- und Kratzbeständigkeit, welches dadurch gekennzeichnet ist, dass man die Komponenten (A), (B), (C) und (D) mit Hilfe eines Hochdruckhomogenisators herstellt. Erfindungsgemäß bevorzugt sind Homogenisatoren, die mindestens einen Energieeintrag von mindestens 200 KJ/m³ bewirken.

Weitere Gegenstände der Erfindung sind durch die Ansprüche gekennzeichnet.

Die Zusammensetzungen lassen sich durch Rakeln, Tauchen oder Spritzapplikation auf das zu beschichtende Substrat auftragen und ergeben nach dem Einbrennprozeß eine Beschichtung mit hervorragendem Trenneffekt. Durch Einbrennen der Zusammensetzung (Vorkondensat) bei Temperaturen und unter Bedingungen, wie sie beispielsweise in der DE 37 28 414 C1 beschrieben sind, ist es möglich, einen vollständigen Reaktionsumsatz zu erhalten.

Zweckmäßig wird das Einbrennen bei erhöhter Temperatur unter Verwendung eines Katalysators durchgeführt. Geeignete Katalysatoren, wie sie in der EP 0 092 701 A beschrieben sind, sind zum Beispiel Metallkatalysatoren auf Basis von zum Beispiel Magnesium, Kobalt, Eisen, Aluminium, Titan, Blei, Zink oder Zinn, beispielsweise in Form ihrer Laurate, Oktoate, Acetate, Acetylacetonate, Neodecanate oder Naphthalate. Besonders geeignete Organozinnkatalysatoren sind beispielsweise Dibutylzinndilaurat, Dibutylzinndioktoat oder Dibutylzinndiacetat. Besonders geeignete Organotitankatalysatoren sind beispielsweise Tetra(n-butyl)titanat oder Tetra-(isopropyl)titanat.

Gegebenenfalls können durch Formulierung mit Pigmenten (mit Teichengrößen im µm-Bereich) auch farbige Beschichtungszusammensetzungen erhalten werden. Zusatzstoffe aus der Gruppe der Lösemittel, Haftvermittler, Rheologiesteurungsmittel, Stabilisatoren oder Additive ermöglichen eine Anpassung der Formulierung an die jeweilige Applikationsart. Durch die Einarbeitung von PTFE (Polytetrafluorethylen)-Pulver kann zum Beispiel die Trennwirkung weiter verbessert werden.

Die erfindungsgemäßen Trennmittel sind für eine Vielzahl von Substraten in allen Anwendungsgebieten in Haushalt, Technik und Industrie geeignet wie beispielsweise Antifoulinganstriche für Schiffe, Luft- und Raumfahrzeughüllen, Ausrüstungsgegenstände für Sport, Freizeit und Gewerbe wie Helme, Kleidung, Planen, Leuchtmittel.

Besonders bevorzugte Substrate, die mit Hilfe der vorliegenden Erfindung beschichtet werden können, sind beispielsweise Heizbänder, Grillstäbe, Backbleche, Backformen, Pfannen, Metalltöpfe und dergleichen.

Die Erfindung wird anhand der folgenden Beispiele erläutert.

### Ausführungsbeispiele:

### Bezugs-Beispiel 1

### Herstellung des Siliconharzes (A):

Das Alkoxypolysiloxan der Formel (C₆H₅)_{0,45}(CH₃)_{0,65}-Si(OC₂H₅)_{0,28}O_{1,31} (A) ist in DE 37 28 414 C beschrieben und wurde gemäß der DE 34 12 648 A aus Phenyltrichlorsilan, Methylethoxypolysiloxan, Ethanol und Wasser hergestellt. Das Siliconharz hatte einen Ethoxygehalt von 11,9 Gew.-%.

### Beispiel 1

### (erfindungsgemäße Zusammensetzung)

263 g eines Hydroxygruppen enthaltenden Polyesters (C) mit einer OH-Zahl von 560 mg KOH/g (hergestellt aus Trimethylolpropan und Dimethylterephthalat unter Katalyse nach DE 37 28 414 A) wurde mit 1000 g des Siliconharzes (A) aus Bezugs-Beispiel 1 und mit 781 g Xylol, 381 g Diethylenglycoldimethylether und 0,3 g Tetra(n-butyl)titanat bei 135°C bis zu einem Reaktionsumsatz umgesetzt, bei dem die auf einer Glasplatte getrocknete Zusammensetzung eine klare, transparente Beschichtung ergab. Die abdestillierte Ethanolmenge von 73 g entsprach einem Reaktionsumsatz von 60 %. Zu dem Siliconpolyesterharz wurden anschließend 252g Aerosil^{®} Alu 65 (Degussa AG)zugegeben und 2,2 g eines Polydimethylsiloxans (B) der Formel C₂H₅O-[Si(CH₃)₂O]₃₀-C₂H₅ zugegeben und mit 5 g Tetra (n-butyl)titanat versetzt.

### Beispiel 2

### (erfindungsgemäße Zusammensetzung)

263 g eines Hydroxygruppen enthaltenden Polyesters (C) mit einer OH-Zahl von 560 mg KOH/g (hergestellt aus Trimethylolpropan und Dimethylterephthalat unter Katalyse nach DE 37 28 414 A) wurde mit 1000 g des Siliconharzes (A) aus Bezugs-Beispiel 1 und mit 781 g Xylol, 381 g Diethylenglycoldimethylether und 0,3 g Tetra(n-butyl)titanat bei 135°C bis zu einem Reaktionsumsatz umgesetzt, bei dem die auf einer Glasplatte getrocknete Zusammensetzung eine klare, transparente Beschichtung ergab. Die abdestillierte Ethanolmenge von 73 g entsprach einem Reaktionsumsatz von 60 %. Zu dem Siliconpolyesterharz wurden anschließend 402 g Aerosil® Alu 65 (Degussa AG)zugegeben und 2,2 g eines Polydimethylsiloxans (B) der Formel C₂H₅O-[Si(CH₃)₂O]₃₀-C₂H₅ zugegeben und mit 5 g Tetra (n-butyl)titanat versetzt.

### Beispiel 3

### (erfindungsgemäße Zusammensetzung)

Eine Mischung aus Methyl-Phenyl-Siliconharz und Polydiorganosiloxan nach Beispiel 1 aus EP 0 239 049 C wurde mit 20 Gew% Aerosil^{®} 9200 versetzt.

### Beispiel 4

### (erfindungsgemäße Zusammensetzung)

Eine Mischung aus Methyl-Phenyl-Siliconharz und Polydiorganosiloxan nach Beispiel 1 aus EP 0 239 049 C wurde mit 30 Gew% Aerosil® 9200 versetzt.

### Vergleichs-Beispiel V 1

### (nicht erfindungsgemäße Zusammensetzung)

263 g eines Hydroxygruppen enthaltenden Polyesters (C) mit einer OH-Zahl von 560 mg KOH/g (hergestellt aus Trimethylolpropan und Dimethylterephthalat unter Katalyse nach Beispiel 1.1 aus DE 37 28 414 A) wurde mit 1000 g des Siliconharzes (A) aus Bezugs-Beispiel 1 und 2,5 g eines Polydimethylsiloxans (B) der Formel C₂H₅O-[Si(CH₃)₂O]₃₀-C₂H₅ in 781 g Xylol, 381 g Diethylenglycoldimethylether und 0,3 g Tetra(n-butyl)titanat bei 135°C bis zu einem Reaktionsumsatz umgesetzt, bei dem die auf einer Glasplatte getrocknete Zusammensetzung eine klare, transparente Beschichtung ergab. Die abdestillierte Ethanolmenge von 74 g entsprach einem Reaktionsumsatz von 60 %.

### Vergleichs-Beispiel V 2

### (nicht erfindungsgemäße Zusammensetzung)

263 g eines Hydroxygruppen enthaltenden Polyesters (C) mit einer OH-Zahl von 560 mg KOH/g (hergestellt aus Trimethylolpropan und Dimethylterephthalat unter Katalyse nach Beispiel 1.1 aus DE 37 28 414 A) wurde mit 1000 g des Siliconharzes (A) aus Bezugs-Beispiel 1 und 2,5 g eines Polydimethylsiloxans (B) der Formel 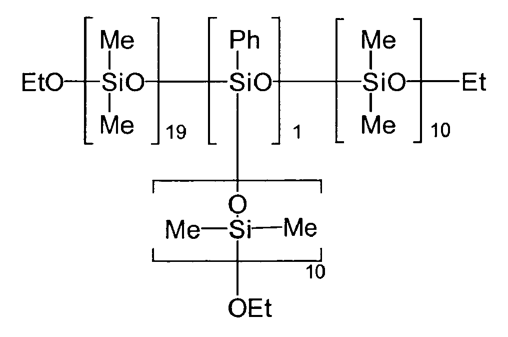 in 781 g Xylol, 381 g Diethylenglycoldimethylether und 0,3 g Tetra(n-butyl)titanat bei 135°C bis zu einem Reaktionsumsatz umgesetzt, bei dem die auf einer Glasplatte getrocknete Zusammensetzung eine klare, transparente Beschichtung ergab. Die abdestillierte Ethanolmenge von 74 g entsprach einem Reaktionsumsatz von 60%.

### Vergleichs-Beispiel V 3

### (nicht-erfindungsgemäße Zusammensetzung)

263 g eines Hydroxygruppen enthaltenden Polyesters (C) mit einer OH-Zahl von 560 mg KOH/g (hergestellt aus Trimethylolpropan und Dimethylterephthalat unter Katalyse nach DE 37 28 414 A) wurde mit 1000 g des Siliconharzes (A) aus Bezugs-Beispiel 1 mit 781 g Xylol, 381 g Diethylenglycoldimethylether und 0,3 g Tetra(n-butyl)titanat bei 135°C bis zu einem Reaktionsumsatz umgesetzt, bei dem die auf einer Glasplatte getrocknete Zusammensetzung eine klare, transparente Beschichtung ergab. Die abdestillierte Ethanolmenge von 73 g entsprach einem Reaktionsumsatz von 60 %. Zu dem Siliconpolyesterharz wurden anschließend 2,2 g eines Polydimethylsiloxans (B) der Formel C₂H₅O-[Si(CH₃)₂O]₃₀-C₂H₅ zugegeben und mit 5 g Tetra(n-butyl)titanat versetzt. Die Formulierung entsprach Zubereitung Z--1 aus DE 37 28 414 C.

### Vergleichs-Beispiel V 4

### (nicht-erfindungsgemäße Zusammensetzung)

Eine Mischung aus Methyl-Phenyl-Siliconharz und Polydiorganosiloxan nach Beispiel 1 aus EP 0 239 049 C.

### Verfahrensweise 1 (Herstellung der Beschichtungen mit niedriger Dispergierenergie)

Die Zusammensetzungen wurden durch Vermischen der Komponenten entsprechend Tabelle 1 hergestellt. Die Vermischung fand mit einem Dispermaten statt, der einen Energieeintrag von 15 kJ/m³ bewirkt.

**Tabelle 1: Formulierung der Zusammensetzungen (in Gewichtsanteilen), die mit einem Dispermaten hergestellt wurden.**

| Beschichtung | 1 | 2 | 3 | 4 | 5 | 6 | 7 | 8 |
|---|---|---|---|---|---|---|---|---|
| | | | | | | | | |
| Zusammensetzung nach Beispiel 1 | | | | | 500 g | | | |
| Zusammensetzung nach Beispiel 2 | | | | | | 500 g | | |
| Zusammensetzung nach Beispiel 3 | | | | | | | 500 g | |
| Zusammensetzung nach Beispiel 4 | | | | | | | | 500 g |
| Zusammensetzung nach V 1 | 500 g | | | | | | | |
| Zusammensetzung nach V 2 | | 500 g | | | | | | |
| Zusammensetzung nach V 3 | | | 500 g | | | | | |
| Zusammensetzung nach V 4 | | | | 500 g | | | | |
| Xylol | | | | 100 g | | | 100 g | 100 g |

Die Beschichtungen wurden durch Rakeln mit einer Trockenfilmstärke von ca. 20 bis 25 µm aufgetragen und 15 Minuten bei 280°C eingebrannt. Es ergaben sich jeweils homogene Filme.

### Verfahrensweise 2 (Herstellung der Beschichtungen mit hoher Dispergierenergie)

Die erfindungsgemäßen Zusammensetzungen wurden durch Vermischen der Komponenten entsprechend Tabelle 1 hergestellt. Die Vermischung fand mit einem Hochdruckhomogenisator statt, der einen Energieeintrag von 200 kJ/m³ bewirkt.

Verfahren der Hochdruckhomogenisation: In einem 80 l Edelstahl-Ansatzbehälter werden die Bestandteile nach Tabelle 2 vorgelegt. Mit Hilfe eines Dispergier- und Saugmischers der Firma Ystrahl (bei 4500 UpM) werden die Trennharze grob vordispergiert. Die Dispergierung wird mit einem Rotor/Stator Durchlaufhomogenisator Typ Z 66 der Firma Ystral mit vier Bearbeitungskränzen, einer Statorschlitzbreite von 1 mm und einer Drehzahl von 11 500 UpM vervollständigt. Diese "Vordispersion" wird mit einer "Wet-Jet-Mill", Ultimaizer System der Firma Sugino Machine Ltd., Modell HJP-25050, bei einem Druck von 250 MPa und einem Diamantdüsendurchmesser von 0,3 mm und zwei Mahl-Durchgängen vermahlen. Dabei wird ein Energieeintrag von 200 kJ/m³ erreicht.

**Tabelle 2: Formulierung der Zusammensetzungen (in Gewichtsanteilen), die mit einem Hochdruckhomogenisator hergestellt wurden.**

| Beschichtung | 9 | 10 | 11 | 12 | 13 | 14 | 15 | 16 |
|---|---|---|---|---|---|---|---|---|
| | | | | | | | | |
| Zusammensetzung nach Beispiel 1 | | | | | 50 kg | | | |
| Zusammensetzung nach Beispiel 2 | | | | | | 50 kg | | |
| Zusammensetzung nach Beispiel 3 | | | | | | | 50 kg | |
| Zusammensetzung nach Beispiel 4 | | | | | | | | 50 kg |
| Zusammensetzung nach V 1 | 50 kg | | | | | | | |
| Zusammensetzung nach V 2 | | 50 kg | | | | | | |
| Zusammensetzung nach V 3 | | | 50 kg | | | | | |
| Zusammensetzung nach V 4 | | | | 50 kg | | | | |
| Xylol | | | | 10 kg | | | 10 kg | 10 kg |

Die Beschichtungen wurden durch Rakeln mit einer Trockenfilmstärke von ca. 20 bis 25 µm aufgetragen und 15 Minuten bei 280°C eingebrannt. Es ergaben sich jeweils homogene Filme.

### Testmethoden:

### Trenneffekt:

Der Trenneffekt wurde durch Backen einer handelsüblichen Backmischung für Kuchen auf dem mit den Zusammensetzungen beschichteten Aluminiumblech bestimmt. Die Entfernbarkeit des Kuchens nach dem Backvorgang wurde bewertet:
0: keine Haftung des Kuchens
1: leichte Haftung des Kuchens
2: schwere Entfernbarkeit des Kuchens
3: Kuchen bleibt größtenteils auf der Beschichtung haften.

Die Beständigkeit des Trenneffektes wurde durch 100-maliges Wiederholen des Vorganges überprüft.

### Kochwassertest:

Ein mit der Zusammensetzung (20 µm) beschichtetes Aluminiumblech wurde für 8 Stunden in einen mit kochendem Wasser gefüllten Behälter getaucht. Die Beschichtung wurde nach Entnahme aus dem kochenden Wasser auf Haftung und Blasenbildung überprüft. Die Haftungsprüfung erfolgte durch Gitterschnitt nach DIN ISO 2409.
Die Bewertung erfolgte nach den folgenden Noten:
0: kein Einfluß nach Belastung
1: leichte Blasenbildung und/oder leichter Haftungsverlust
2: deutliche Blasenbildung und/oder starker Haftungsverlust.

### Temperaturbeständigkeit:

Die Temperaturbeständigkeit wurde durch Lagerung bei 220°C über einen Zeitraum von 30 Stunden bestimmt: Überprüft wurde die Gilbungsbeständigkeit (visuell), Haftung und Glanzerhaltung. Die Haftungsprüfung erfolgte durch Gitterschnitt nach DIN ISO 2409. Die Bewertung erfolgte nach folgenden Noten:
0: kein Einfluß durch die Temperatur-Belastung
1: leichte Gilbung und/oder leichter Haftungsverlust nach Temperatur-Belastung
2: deutliche Gilbung und/oder starker Haftungsverlust nach Temperatur-Belastung.

### Lagerstabilität:

Bei der Bestimmung der Lagerstabilität nach 5 Wochen bei 50°C wurden Viskositätsstabilität, Trübungen, Separationserscheinungen und die Verarbeitbarkeit beurteilt.

### Haftung:

Die Haftungsprüfung erfolgte durch Gitterschnitt nach DIN ISO 2409.

### Bleistifthärte:

Die Bleistifthärte wurde nach ECCA-Norm T4-ISO 3270-ASTM D 3363 bestimmt .

### Abrasionbeständigkeit:

Analog DIN 53754 wurden Abrasionsmessungen (1000 Umdrehungen / CS 17 Reibräder) durchgeführt. Gemessen wurde die Abriebsdifferenz im mg Abrieb vor und nach der Abrasionsbelastung.

Die Vorteile der erfindungsgemäßen Beschichtungen werden aus den durchgeführten Tests (Tabelle 2 und Tabelle 3) deutlich.

**Tabelle 3: Eigenschaften der getesteten Beschichtungen, die mit Hilfe eines Dispermaten (Verfahren 1) hergestellt wurden:**

| Beschichtung | 1 | 2 | 3 | 4 | 5 | 6 | 7 | 8 |
|---|---|---|---|---|---|---|---|---|
| | | | | | | | | |
| Lagerstabilität Flüssiglack (5 Wochen bei 50°C) | n.i.O. | n.i.O. | n.i.O. | n.i.O. | n.i.O. | i.O. | n.i.O. | i.O. |
| Trenneffekt | 0 | 0 | 0 | 0 | 0 | 0 | 0 | 0 |
| Trenneffekt nach 100 Cyclen | 0 - 1 | 0 - 1 | 2 | 1 | 0 | 0 | 0 | 0 |
| Kochwasserbeständigkeit | 0 - 1 | 0 - 1 | 0 - 1 | 3 | 0 | 0 | 0 | 0 - 1 |
| Bleistifthärte bei | 5H | 5H | 5H | H | 6H | 6H | 6H | 2H |
| Raumtemperatur: bei 200°C: | 4H | 4H | 4H | 2B | 5H | 5H | 5H | H |
| Glanz bei 60° (vor/nach 100 Cyclen) | 90/88 | 92/91 | 92/82 | 85/72 | 92/90 | 94/92 | 82/82 | 75/74 |
| Temperaturbeständigkeit bei 220°C, 30 Stunden | 0 | 0 | 0 | 0 | 0 | 0 | 0 | 0 |
| Abrasionsbeständigkeit | 275 mg | 159 mg | 175 mg | 179 mg | 172 mg | 109 mg | 105 mg | 98 mg |
| Haftung zum Untergrund | i.O. | i.O. | i.O. | i.O. | i.O. | i.O. | i.O. | i.O. |

| | | | | | | | | |
|---|---|---|---|---|---|---|---|---|
| (mit (n).i.O. = (nicht) in Ordnung) | | | | | | | | |

Besonders hervorzuheben ist die erhöhte Lagerstabilität von den Beschichtungen 6 und 8 im Vergleich zu den füllstofffreien Beschichtungen 1 und 4. Die Füllstoffzugabe bewirkt eine Erhöhung der Stabilität dieser Beschichtungen.

**Tabelle 4: Eigenschaften der getesteten Beschichtungen, die mit Hilfe eines Hochdruckhomogenisator (Verfahren 2) hergestellt wurden.**

| Beschichtung | 9 | 10 | 11 | 12 | 13 | 14 | 15 | 16 |
|---|---|---|---|---|---|---|---|---|
| | | | | | | | | |
| Lagerstabilität Flüssiglack (5 Wochen bei 50°C) | n.i.O. | n.i.O. | n.i.O. | n.i.O. | i.O. | i.O. | i.O. | i.O. |
| Trenneffekt | 0 | 0 | 0 | 0 | 0 | 0 | 0 | 0 |
| Trenneffekt nach 100 Cyclen | 0 - 1 | 0 - 1 | 2 | 1 | 0 | 0 | 0 | 0 |
| Kochwasserbeständigkeit | 0 - 1 | 0 - 1 | 0 - 1 | 3 | 0 | 0 | 0 | 0 - 1 |
| Bleistifthärte bei | 5H | 5H | 5H | H | 6H | 6H | 6H | 2H |
| Raumtemperatur: bei 200°C: | 4H | 4H | 4H | 2B | 5H | 5H | 5H | H |
| Glanz bei 60° (vor/nach 100 Cyclen) | 91/89 | 91/90 | 90/80 | 84/71 | 90/84 | 93/91 | 85/80 | 78/71 |
| Temperaturbeständigkeit bei 220°C, 30 Stunden | 0 | 0 | 0 | 0 | 0 | 0 | 0 | 0 |
| Abrasionsbeständigkeit | 272 mg | 155 mg | 168 mg | 184 mg | 102 mg | 99 mg | 95 mg | 90 mg |
| Haftung zum Untergrund | i.O. | i.O. | i.O. | i.O. | i.O. | i.O. | i.O. | i.O. |

| | | | | | | | | |
|---|---|---|---|---|---|---|---|---|
| (mit (n).i.O. = (nicht) in Ordnung) | | | | | | | | |

Besonders hervorzuheben ist die erhöhte Lagerstabilität von den Beschichtungen 13 und 15 im Vergleich zu rezepturidentischen Beschichtungen 5 und 7. Die Hochdruckhomogenisation bewirkt eine Erhöhung der Stabilität dieser Beschichtungen.

## Patentansprüche

1. Zusammensetzung zur Herstellung von Trennbeschichtungen, enthaltend
(A) 100 Gew.-Teile eines oder mehrerer Polysiloxanharze der allgemeinen Formel
RₐSi(OR')_{b}O_{(4 - a - b)/2}
mit 0<a<2, 0<b<2 und a+b<4,
(B) 0,05 bis 10 Gew.-Teile eines oder mehrerer linearer und/oder verzweigter Polysiloxane der Formel
R''O-[R'''₂Si-O]ₙ-R''
(C) 5 bis 80 Gew.-Teile eines Hydroxylgruppen enthaltenden Polyesters,
wobei
Rₐ, R', R'' und R''' jeweils unabhängig voneinander für einen Alkylrest mit 1 bis 8 C-Atomen oder einen aromatischen Rest mit 6 bis 20 C-Atomen steht und
n für eine Zahl im Bereich von 4 bis 5000 steht,
welche **dadurch gekennzeichnet ist, dass**
(D) 2 bis 80 Gew.-Teile, vorzugsweise 10 bis 50, insbesondere 20 bis 30 Gew.-Teile eines oder mehrerer nanoskaliger Feststoffe mitverwendet werden.

2. Zusammensetzung nach Anspruch 1, **dadurch gekennzeichnet, dass** die Reste Rₐ, R', R'' und R''' jeweils unabhängig voneinander für einen Rest stehen, der ausgewählt ist aus Methyl, Ethyl, Isopropyl, n-Butyl, t-Butyl und Phenyl.

3. Zusammensetzung nach Anspruch 1 und/oder 2, **dadurch gekennzeichnet, dass** der Rest R'' für einen Wasserstoffrest oder eine -Si(CH₃)₃-Gruppe steht.

4. Zusammensetzung nach mindestens einem der Ansprüche 1 bis 3, **dadurch gekennzeichnet, dass** der Rest R''' für eine Polysiloxanseitenkette der allgemeinen Formel
-[R'''₂Si-O]ₙ-R''
steht.

5. Zusammensetzung nach mindestens einem der Ansprüche 1 bis 4, enthaltend 0,5 bis 8 Gew.-Teile Polysiloxan (B), bezogen auf 100 Gew.-Teile (A).

6. Zusammensetzung nach mindestens einem der Ansprüche 1 bis 5, enthaltend 30 bis 70 Gew.-Teile Polyester (C), bezogen auf 100 Gew.-Teile (A).

7. Zusammensetzung nach mindestens einem der Ansprüche 1 bis 6, enthaltend 15 bis 40 Gew.-Teile eines nanoskaligen Feststoffes (D), bezogen auf 100 Gew.-Teile (A) + (B) + (C).

8. Zusammensetzung nach mindestens einem der Ansprüche 1 bis 7, enthaltend weiterhin einen Veresterungskatalysator.

9. Zusammensetzung nach mindestens einem der Ansprüche 1 bis 8, enthaltend weiterhin Pigmente, Rheologiesteuermittel, Füllstoffe, Lösemittel, Additve, Haftvermittler und/oder Stabilisatoren.

10. Zusammensetzung nach mindestens einem der Ansprüche 1 bis 9, erhältlich durch gleichzeitige Umsetzung der Komponenten (A), (B),(C)und (D).

11. Zusammensetzung nach Anspruch 10, **dadurch gekennzeichnet, dass** der Umsetzungsgrad 20 bis 80 %, insbesondere 40 bis 65 %, beträgt.

12. Substrate, beschichtet mit einer Zusammensetzung nach einem der Ansprüche 1 bis 11.

13. Verfahren zur Herstellung einer Zusammensetzung nach einem der Ansprüche 1 bis 11, **dadurch gekennzeichnet, dass** man die Komponenten (A), (B), (C) und (D) in Gegenwart eines Katalysators, insbesondere eines Metallkatalysators umgesetzt werden.

14. Verfahren zur Herstellung einer Zusammensetzung nach einem der Ansprüche 1 bis 11 und 13, **dadurch gekennzeichnet, dass** man die Komponenten (A), (B), (C) und (D) mit Hilfe eines Hochdruckhomogenisators herstellt.

15. Verfahren nach Anspruch 13, **dadurch gekennzeichnet, dass** man einen Organotitankatalysator einsetzt.

16. Verfahren nach Anspruch 13, **dadurch gekennzeichnet, dass** man die Komponenten (A), (B), (C) und (D) in Gegenwart eines oder mehrerer Lösemittel umsetzt.

17. Verfahren nach einem der Ansprüche 13 bis 16, **dadurch gekennzeichnet, dass** man die Reaktion bis zu einem Umsetzungsgrad von 20 bis 80 %, bezogen auf die Komponente (B), durchführt.
